# EUROPÄISCHE PATENTSCHRIFT

(11) **EP 0 874 500 B1**
(45) Veröffentlichungstag und Bekanntmachung des Hinweises auf die Patenterteilung: **02.02.2005**
(21) Anmeldenummer: 98107001.4
(22) Anmeldetag: 17.04.1998
(51) Int. Cl.: H04L 27/10, H04L 27/30

(54) **Bitserielles Übertragungsverfahren für einen Datenblock**
Serial bit transmission method for a data block
Procédé de transmission série de bits pour salve de données

(30) Priorität: 21.04.1997 DE 19716581
(43) Veröffentlichungstag der Anmeldung: 28.10.1998
(73) Patentinhaber: Ritto - Werk Loh GmbH & Co. KG, 35708 Haiger (DE)
(72) Erfinder: Heinbach, Hartmut, 57080 Siegen (DE)
(74) Vertreter: Fleck, Hermann-Josef, Dr.-Ing.

(56) Entgegenhaltungen:
- US-A- 4 079 355
- US-A- 5 070 500

## Beschreibung

Die Erfindung betrifft ein bitserielles Übertragungsverfahren für einen durch Modulation mit Frequenzumtastung gebildeten Datenblock, der aus einem Präambelzeichen und mehreren durch Pausen voneinander getrennten und durch die Datenbits "1" und "0" zusammengesetzten Wörtern besteht.

Bei derartigen Übertragungsverfahren ist der Aufwand für die Bitsynchronisierung und für die Wortsynchronisierung beachtlich. Außerdem steigt der Aufwand weiter stark an, wenn das Übertragungsverfahren unempfindlich gegenüber Toleranzen der Sende- und Empfangsoszillatoren sein muß oder gar durch Störungen verursachte Fehler erkennen und verbessern können muß.

Es ist Aufgabe der Erfindung, ein bitserielles Übertragungsverfahren für einen Datenblock zu schaffen, das mit einfachen Mitteln realisiert und synchronisiert werden kann und gegenüber fehlerhafter Übertragung eine Redundanz besitzt.

Diese Aufgabe wird nach der Erfindung dadurch gelöst, daß das Präambelzeichen ausy Perioden mit einer ersten Frequenz gebildet ist, daß die Datenbits der Wörter mit unterschiedlichen Anzahlen Perioden einer zweiten Frequenz beginnen und mit unterschiedlichen Anzahlen der ersten Frequenz enden, wobei n21 und auch n20 < y ist, daß ein Wechsel der Frequenz von f1 zu f2 das Ende des Präambelzeichens und den Beginn der Datenbits der Wörter anzeigt, daß auf der Empfangsseite die Perioden der zweiten Frequenz abgezählt und mit einem Schwellwert aus der halben Summe der unterschiedlichen Anzahlen verglichen werden und daß beim Unterschreiten des Schwellwertes der Empfang des Datenbits "1" und beim Überschreiten des Schwellwertes der Empfang des Datenbits "0" ausgewertet wird.

Die beiden verwendeten Frequenzen können größere Toleranzen aufweisen. Es muß nur gewährleistet sein, daß empfangsseitig gegenüber dem Schwellwert eine ausreichende Auswertegenauigkeit vorhanden ist, und daß die Dauer des Präambelzeichens sich wesentlich von der Dauer des Anteils der ersten Frequenz an den Datenbits unterscheidet. Auf der Empfangsseite braucht nur der Frequenzwechsel und die Anzahl der Perioden des Anteils der zweiten Frequenz abgezählt und mit dem gebildeten Schwellwert verglichen zu werden, um eine eindeutig Bit- und Wortsynchronisierung zu erhalten.

Ein auf einfachen Übertragungsstrecken einsetzbares Übertragungsverfahren wird dadurch geschaffen, daß die erste und zweite Frequenz im Verhältnis 1:2 und mit 8 kHz und 16 kHz gewählt sind. Das Übertragungsverfahren kann daher auch mit Vorteil auf Zweidrahtleitungen eingesetzt werden, wie sie z.B. bei Türsprechanlagen vorhanden sind.

Eine ausreichende Unterscheidbarkeit für das Präambelzeichen wird dadurch geschaffen, daß das Präambelzeichen eine Dauer Tv = v.T1 = 12.T1 aufweist, wobei T1 die Periodendauer der Frequenz f1 ist, während für die Datenbits "1" und "0" vorgesehen wird, daß n21 = 4 und n20 = 8, d.h. n20 = 2.n21, und n11 = 4 und n10 = 2, d.h. n11 = 2.n10 , sowie y = 80 gewählt sind.

Ist die Pausenzeit zwischen den Wörtern mit der doppelten Periodendauer der ersten Frequenz gewählt, dann kann das Ende eines Wortes eindeutig angezeigt werden, ohne durch die Pausen die Übertragungszeit für den Datenblock unnötig zu verlängern.

Bei ausreichend kurzen Zeiten für die Datenbits und die Wörter wird dadurch noch eine ausreichende Redundanz gegenüber Störungen in der Übertragung erreicht, daß das Datenbit eines Wortes mit der 6-fachen Periodendauer der ersten Frequenz gewählt ist und daß das Wort x Datenbits umfaßt, wobei x die binären Möglichkeiten im Wort mit 2^{x} bestimmt.

Die Gesamt-Übertragungszeit für den Datenblock ergibt sich dann aus der Summe der Zeiten für das Präambelzeichen, für die k Wörter und die (k-1) Pausen.

Die Erfindung wird anhand eines in den Zeichnungen dargestellten Ausführungsbeispiels näher erläutert. Es zeigen:
Fig. 1 ein Blockschaltbild mit den Übertragungseinrichtungen,
Fig. 2 schematisch einen Datenblock,
Fig. 3 das Präambelzeichen des Datenblockes,
Fig. 4 die Darstellung des Datenbits "1" und
Fig. 5 die Darstellung des Datenbits "0".

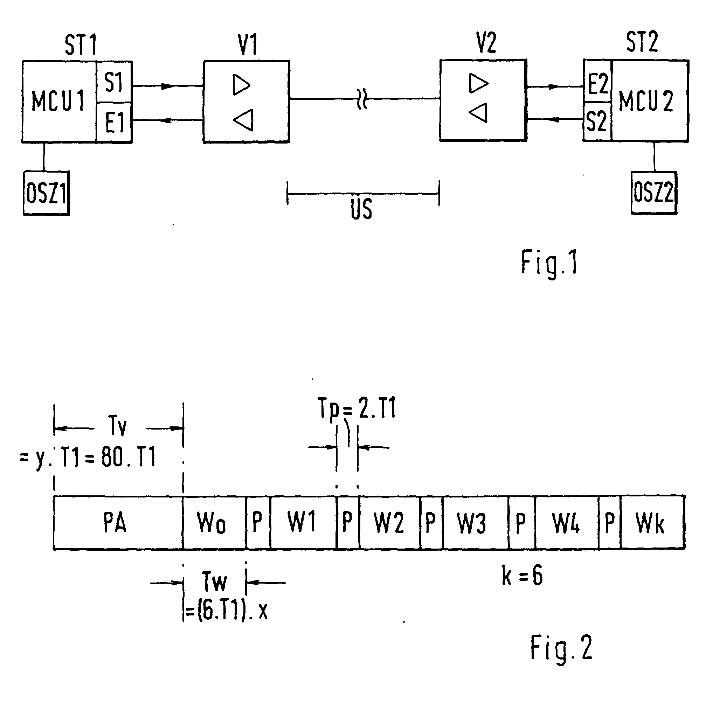

In Fig. 1 sind die Übertragungseinrichtungen für ein in beiden Richtungen arbeitendes Übertragungsverfahren gezeigt. In den beiden Stellen ST1 und ST2 sind Oszillatoren OSZ1 und OSZ2 vorgesehen, die einen Mikrocomputer MCU1 bzw. MCU2 steuern, denen jeweils eine Sende- und eine Empfangseinrichtung S1 und E1 bzw. S2 und E2 zugeordnet ist. In die Übertragungsstrecke ÜS sind Verstärker V1 und V2 einbezogen, die einen Verdrahtweg abschließen.

Wie Fig. 2 zeigt, besteht ein Datenblock aus einem Präambelzeichen PA, an das sich Wörter Wo bis Wk anschließen, die durch Pausen P voneinander getrennt sind. Das Präambelzeichen PA hat eine Dauer von Tv = 80.T1 und die Pausen P von Tp = 2.T1, während die Wörter Wo bis Wk mit einer Dauer von Tw = (6.T1)x, mit 6.T1 = Tb1 = Tb2 die Dauer eines Datenbits "1" und "0" sowie mit x die Anzahl der Datenbits pro Wort Wo bis Wk angegeben sind.

Für das Verfahren werden eine erste Frequenz f1 von z.B. 8 kHz bereitgestellt und eine zweite Frequenz f2 von z.B. 16 kHz. Die beiden Frequenzen stehen im Ausführungsbeispiel im Verhältnis 1:2. Das Verhältnis kann auch anders gewählt werden. Der zu bildende Schwellwert = Mittelwert der beiden Frequenzen beträgt 12 kHz und ist gegenüber der Frequenz von 16 kHz eindeutig zu unterscheiden, auch wenn letztere stark toleriert. Auf der Empfangsseite wird bei dem neuen Übertragungsverfahren nur ausgewertet, ob bei der Abzählung der Perioden der zweiten Frequenz f2 der Schwellwert unter- oder überschritten wird, um eine eindeutige Unterscheidung für die Datenbits "1" und "0" zu erhalten.

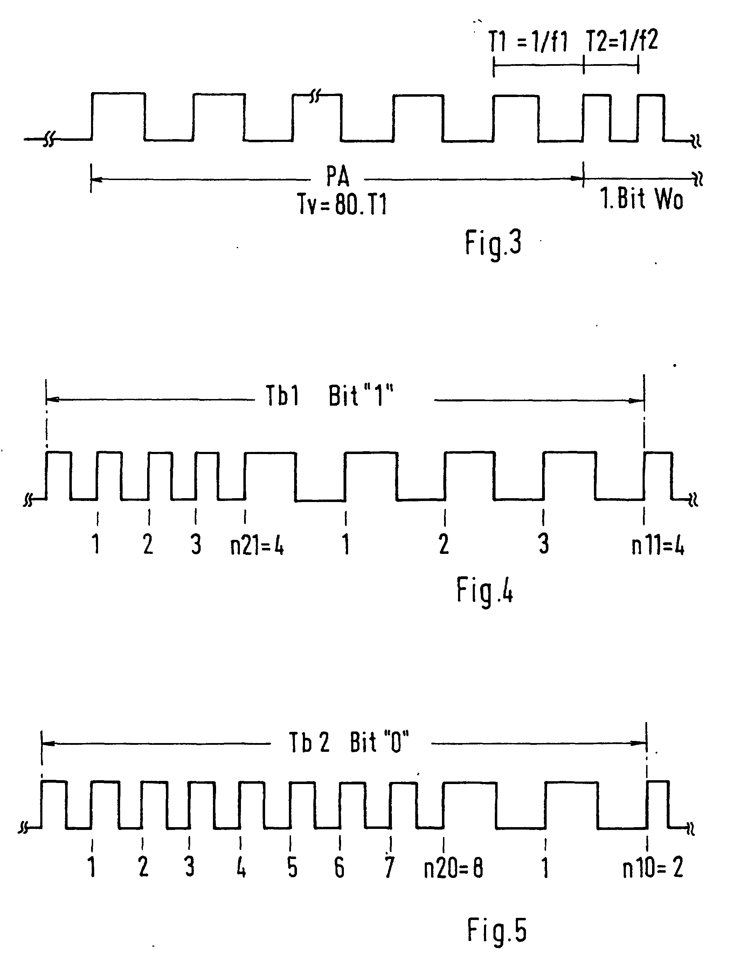

Wie das Diagramm nach Fig. 3 zeigt, beginnt jeder Datenblock mit Impulsen der ersten Frequenz f1, deren Periodendauer T1 = 1/f1 doppelt so groß ist wie die Periodendauer T2 = 1/f2 der zweiten Frequenz f2. Ein ausreichend langes Präambelzeichen PA wird durch Tv = 12.T1 erhalten, da für die Datenbits "1" und "0" nur n11 = 4 und n10 = 2 Perioden benötigt werden.

Am Ende des Präambelzeichens PA erfolgt ein Wechsel von der erste Frequenz f1 zu der zweiten Frequenz f2. Der Anfang des ersten Wortes Wo nach dem Präambelzeichen PA ist daher eindeutig gekennzeichnet.

Wie Fig. 4 zeigt, beginnt ein Datenbit "1" mit n21 = 4 Perioden der zweiten Frequenz f2 und endet mit n11 = 4 Perioden der ersten Frequenz f1. Das Datenbit "0" beginnt mit n20 = 8 Perioden der zweiten Frequenz f2 und endet mit n10 = 2 Perioden der Frequenz f1. Der Wechsel von der ersten Frequenz f1 auf die zweite Frequenz f2 tritt zu Beginn jedes neuen Datenbits auf, unabhängig davon, ob das Datenbit eine "1" oder eine "0" ist, wie die Fig. 4 und 5 erkennen lassen. Innerhalb der Wörter Wo bis Wk reihen sich die Datenbits daher pausenlos aneinander. Weist ein Wort Wo bis Wk x Datenbits auf, dann ist die Zahl der Möglichkeiten pro Wort mit 2^{x} gegeben. Die Zeitdauer Tw für ein Wort ist beim Ausführungsbeispiel dann mit x.(bT1) gegeben. Die Anzahl x der Datenbits pro Wort kann auch 1 betragen und wird nach den benötigten Möglichkeiten gewählt. Die Pause P zwischen den Wörtern Wo bis Wk wird mit Tp = 2T1 gewählt, so daß selbst bei Ausfall einer Periode T1 eines Datenbits "1" oder "0" noch eine ausreichende Redundanz zur Fehlererkennung bzw. Fehlerberichtigung vorhanden ist.

Selbstverständlich liegt es auch im Rahmen der vorliegenden Erfindung, die Frequenzen f1 und f2 zu vertauschen und die Datenbits "1" und "0" mit anderen Anzahlen n21, n20 und n20, n21 darzustellen. Die Datenbits müssen sich nur deutlich von dem Präambelzeichen A unterscheiden. Die Anzahl x der Datenbits pro Wort Wo bis Wk und die Anzahl k der Wörter im Datenblock können beliebig gewählt und an die Anforderungen der Datenübertragung angepaßt werden.

Entscheidend ist und bleibt für die Erfindung, daß alle Datenbits mit derselben Frequenz beginnen, die sich von der Frequenz des Präambelzeichens unterscheidet und daß sich innerhalb der Datenbits "1" und "0" die Anzahl der Perioden der beiden Frequenzen um ein Vielfaches, mindestens dem Faktor 2, unterscheiden, um Fehler erkennen und verbessern zu können.

Durch das Abzählen der Perioden der höheren oder niedrigeren Frequenz und dem Vergleich mit dem Mittelwert beider Frequenzen, wird selbst bei großen Frequenztoleranzen eine eindeutige Auswertung des Datenblockes erreicht.

## Patentansprüche

1. Bitserielles Übertragungsverfahren für einen durch Modulation mit Frequenzumtastung gebildeten Datenblock, der aus einem Präambelzeichen und mehreren durch Pausen voneinander getrennten und durch die Datenbits "1" und "0" zusammengesetzten Wörtern besteht, wobei die Frequenzumtastung aus zwei verschiedenen Frequenzen f1 und f2 besteht, wobei
das Präambelzeichen (PA) aus y Perioden, z.B. 12, mit einer ersten Frequenz (f1) gebildet ist, wobei die Datenbits (Bit "1", Bit "0") der Wörter (Wo bis Wk) mit unterschiedlichen Anzahlen Perioden n11, n10 der ersten Frequenz (f1) enden, z.B. n11 = 4, n10 = 2;
wobei ein Wechsel der Frequenz von f1 zu f2 das Ende des Präambelzeichens (PA) und den Beginn der Datenbits (Bit "1", Bit "0") der Wörter (Wo bis Wk) anzeigt, **dadurch gekennzeichnet dass** die Datenbits (Bit "1", Bit "0") der Wörter (Wo bis Wk) mit unterschiedlichen Anzahlen Perioden n21, n20 der zweiten Frequenz (f2) beginnen, z.B. n21 = 4, n20 = 8; dass n21 < y und n20 < y;
daß auf der Empfangsseite die Perioden n21 bzw. n20 der zweiten Frequenz (f2) abgezählt und mit einem Schwellwert aus der halben Summe der unterschiedlichen Anzahlen n21 und n20 verglichen werden und
daß beim Unterschreiten des Schwellwertes der Empfang des Datenbits "1" und beim Überschreiten des Schwellwertes der Empfang des Datenbits "0" ausgewertet wird.

2. Bitserielles Übertragungsverfahren nach Anspruch 1,
**dadurch gekennzeichnet,**
**daß** die erste und zweite Frequenz f1 und f2 im Verhältnis 1:2 und mit 8 kHz und 16 kHz gewählt sind.

3. Bitserielles Übertragungsverfahren nach Anspruch 1 oder 2,
**dadurch gekennzeichnet,**
**daß** das Präambelzeichen (PA) eine Dauer Tv = v.T1 = 80.T1 aufweist, wobei T1 die Periodendauer der Frequenz f1 ist.

4. Bitserielles Übertragungsverfahren nach einem der Ansprüche 1 bis 3,
**dadurch gekennzeichnet,**
**daß** n21 = 4 und n20 = 8, d.h. n20 = 2.n21 , und n11 = 4 und n10 = 2, d.h. n11 =2.n10, sowie y = 80 gewählt sind.

5. Bitserielles Übertragungsverfahren nach einem der Ansprüche 1 bis 4,
**dadurch gekennzeichnet,**
**daß** die Pausenzeit (Tp) zwischen den Wörten (Wo bis Wk) mit der doppelten Periodendauer (T1) der ersten Frequenz (f1) gewählt ist.

6. Bitserielles Übertragungsverfahren nach einem der Ansprüche 1 bis 5,
**dadurch gekennzeichnet,**
**daß** Datenbit "1" und "0" eines Wortes (Wo bis Wk) mit der 6-fachen Periodendauer (T1) der ersten Frequenz (f1) gewählt ist und daß das Wort (Wo bis Wk) mehrere Datenbits umfaßt.

7. Bitserielles Übertragungsverfahren nach einem der Ansprüche 1 bis 6,
**dadurch gekennzeichnet,**
**daß** er aus dem Präambelzeichen (PA), k Wörtern (Wo bis Wk) und k-1 Pausen (P) besteht.

## Claims

1. Bit-serial transmission method for a data block which is formed by modulation using frequency shift keying and comprises a preamble character and a plurality of words which are separated from one another by breaks and are made up of the data bits "1" and "0",
where the frequency shift keying comprises two different frequencies f1 and f2, where the preamble character (PA) is formed from y periods, e.g. 12, at a first frequency (f1), where the data bits (bit "1", bit "0") in the words (Wo to Wk) end with different numbers of periods n11, n10 at the first frequency (f1), e.g. n11 = 4, n10 = 2;
where a change of frequency from f1 to f2 indicates the end of the preamble character (PA) and the start of the data bits (bit "1", bit "0") in the words (Wo to Wk), **characterized in that** the data bits (bit "1", bit "0") in the words (Wo to Wk) start with different numbers of periods n21, n20 at the second frequency (f2), e.g. n21 = 4, n20 = 8; **in that** n21 < y and n20 < y; **in that** the reception end counts the periods n21 and n20 at the second frequency (f2) and compares them with a threshold value comprising half the sum of the different numbers n21 and n20, and
**in that** reception of the data bit "1" is evaluated if the threshold value is undershot and reception of the data bit "0" is evaluated if the threshold value is exceeded.

2. Bit-serial transmission method according to Claim 1,
**characterized**
**in that** the first and second frequencies f1 and f2 are chosen in the ratio 1:2 and at 8 kHz and 16 kHz.

3. Bit-serial transmission method according to Claim 1 or 2,
**characterized**
**in that** the preamble character (PA) has a duration Tv = v.T1 = 80.T1, where T1 is the period duration at the frequency fl.

4. Bit-serial transmission method according to one of Claims 1 to 3,
**characterized**
**in that** n21 = 4 and n20 = 8, i.e. n20 = 2.n21, and n11 = 4 and n10 = 2, i.e. n11 = 2.n10, and also y = 80 are chosen.

5. Bit-serial transmission method according to one of Claims 1 to 4,
**characterized**
**in that** the break time (Tp) between the words (Wo to Wk) is chosen to be double the period duration (T1) at the first frequency (f1).

6. Bit-serial transmission method according to one of Claims 1 to 5,
**characterized**
**in that** data bit "1" and "0" in a word (Wo to Wk) is chosen to be 6 times the period duration (T1) at the first frequency (f1), and
**in that** the word (Wo to Wk) comprises a plurality of data bits.

7. Bit-serial transmission method according to one of Claims 1 to 6,
**characterized**
**in that** it comprises the preamble character (PA), k words (Wo to Wk) and k-1 breaks (P).

## Revendications

1. Procédé de transmission en série de bits pour une bloc de données formé par modulation par déplacement de fréquence, lequel se compose d'un caractère de préambule et de plusieurs mots séparés les uns des autres par des pauses et composés des bits de données « 1 » et « 0 », le déplacement de fréquence se composant de deux fréquences différentes f1 et f2, le caractère de préambule (PA) étant constitué de y périodes, par exemple 12, avec une première fréquence (f1), les bits de données (bit « 1 », bit « 0 ») terminant les mots (Wo à Wk) avec des nombres de périodes différents n11, n10 de la première fréquence (f1), par exemple n11 = 4, n10 = 2, un changement de fréquence de f1 en f2 indiquant la fin du caractère de préambule (PA) et le débit des bits de données (bit « 1 », bit « 0 ») des mots (Wo à Wk), **caractérisé en ce que** les bits de données (bit « 1 », bit « 0 ») des mots (Wo à Wk) commencent avec des nombres différents de périodes n21, n20 de la deuxième fréquence (f2), par exemple n21 = 4, n20 = 8, que n21 < y et n20 < y, que les périodes n21 ou n20 de la deuxième fréquence (f2) sont comptées du côté de la réception et sont comparées avec une valeur de seuil obtenu à partir de la demi somme des nombres différents n21 et n20 et que la réception des bits de données « 1 » est évaluée si le résultat est supérieur à la valeur de seuil et la réception des bits de données « 0 » est évaluée si le résultat est inférieur à la valeur de seuil.

2. Procédé de transmission en série de bits selon la revendication 1, **caractérisé en ce que** la première et la deuxième fréquence f1 et f2 sont choisies avec un rapport 1:2 et des valeurs de 8 kHz et de 16 kHz.

3. Procédé de transmission en série de bits selon la revendication 1 ou 2, **caractérisé en ce que** le caractère de préambule (PA) présente une durée Tv = v.T1 = 80.T1, Tl étant la durée de la période de la fréquence fl.

4. Procédé de transmission en série de bits selon l'une des revendications 1 à 3, **caractérisé en ce que** les valeurs choisies sont n21 = 4 et n20 = 8, c'est-à-dire n20 = 2.n21, et n11 = 4 et n10 = 2, c'est-à-dire n11 = 2.n10, et y = 80.

5. Procédé de transmission en série de bits selon l'une des revendications 1 à 4, **caractérisé en ce que** le temps de pause (Tp) entre les mots (Wo à Wk) est choisi égal au double de la durée de la période (Tl) de la première fréquence (fl).

6. Procédé de transmission en série de bits selon l'une des revendications 1 à 5, **caractérisé en ce que** le bit de données « 1 » ou « 0 » d'un mot (Wo à Wk) est choisi égal à 6 fois la durée de la période (Tl) de la première fréquence (f1) et que le mot (Wo à Wk) comprend plusieurs bits de données.

7. Procédé de transmission en série de bits selon l'une des revendications 1 à 6, **caractérisé en ce qu'**il se compose du caractère de préambule (PA), de k mots (Wo à Wk) et de k-1 pauses (P).
